# EUROPEAN PATENT APPLICATION

(11) **EP 4 831 770 A1**
(43) Date of publication of application: **28.10.2026**
(21) Application number: 25745309.2
(22) Date of filing: 22.01.2025
(51) Int. Cl.: G06F 1/16, H01R 24/20

(54) **ROLLABLE ELECTRONIC DEVICE INCLUDING CONNECTOR**

(30) Priority: 22.01.2024 KR 20240009715; 22.02.2024 KR 20240025831
(71) Applicant: Samsung Electronics Co., Ltd., Suwon-si, Gyeonggi-do 16677 (KR)
(72) Inventor: LEE, Dohyeon, Suwon-si, Gyeonggi-do 16677 (KR); SEO, Soohyun, Suwon-si, Gyeonggi-do 16677 (KR); CHO, Sujeong, Suwon-si, Gyeonggi-do 16677 (KR); LEE, Wonho, Suwon-si, Gyeonggi-do 16677 (KR); LEE, Soyoung, Suwon-si, Gyeonggi-do 16677 (KR)
(74) Representative: Gulde & Partner
(86) International application number: PCT/KR2025/001198
(87) International publication number: WO 2025/159483

(57) **Abstract**

An electronic device according to various embodiments disclosed in the present document may include: a flexible display; a first housing (210); a second housing (220) coupled to the first housing so as to be slidable with respect to the first housing; a multi-bar (240) which supports at least a portion of the surface of the flexible display; a guide rail (310) which is disposed in the first housing and guides the movement of the multi-bar by accommodating at least a portion thereof; a guide block (320) disposed in the second housing and coupled to the guide rail so as to be slidable along the guide rail in response to the sliding of the second housing; a first opening (331) formed in the guide rail; and a connector (340) which is disposed in the first housing and has at least a portion thereof positioned in the first opening. Various other embodiments are possible.

## Description

### Technical Field

Various embodiments disclosed herein relate to a rollable electronic device including a connector.

### Background Art

Electronic devices are progressively becoming slimmer, and are being developed to increase rigidity, enhance design aspects, and differentiate functional elements thereof. Electronic devices are gradually changing from a uniform rectangular shape to various shapes. Electronic devices may have a transformable structure that is convenient to carry while allowing use of a large-screen display. An electronic device may include a rollable electronic device (e.g., a slidable electronic device) capable of varying a display area of a flexible display (e.g., a rollable display) through support of housings configured to operate in a sliding manner with respect to each other. The rollable electronic device may require an efficient arrangement structure of a driving unit (e.g., a driving module) capable of automatically sliding another housing with respect to one housing.

Meanwhile, the rollable electronic device may include a connector connectable to a charging cable and a data cable. The rollable electronic device may supply power to a battery based on connection between the connector and the charging cable. The rollable electronic device may transmit data to an external electronic device connected to the data cable and/or receive data from the external electronic device based on connection between the connector and the data cable.

The above information may be provided as related art for the purpose of facilitating an understanding of the disclosure. No assertion or determination is made as to whether any of the foregoing may be considered prior art with respect to the present disclosure.

### Disclosure of Invention

### Technical Problem

An electronic device may include a rollable electronic device (e.g., a slidable electronic device) in which a display area of a flexible display (e.g., a rollable display, an expandable display, or a stretchable display) may be expanded and/or reduced according to an operation state. The rollable electronic device may include a first housing and a second housing at least partially fitted together and coupled to be slidable with respect to each other. For example, the first housing and the second housing may operate to be slidable with respect to each other and support at least a portion of the flexible display, such that the flexible display is induced to have a first display area in a slide-in state and is induced to have a second display area greater than the first display area in a slide-out state.

The rollable electronic device may include a connector connectable to an external device (e.g., a charging cable and/or a data cable). The rollable electronic device may have a connector hole through which the external device passes. The external device may be connected to the connector by passing through the connector hole.

Meanwhile, in a structure in which housings are configured to operate in a slidable manner, there may be a limitation on a position at which the connector hole is formed.

For example, the flexible display may be slid in or slid out into or from the inside of the electronic device based on a sliding operation of the first housing and the second housing. The flexible display may be accommodated in an internal space of the first housing in a state in which at least a portion thereof is bent in a slide-in state. A bending region of the flexible display may be located in a sliding direction of the electronic device, and specifically may be disposed at a lower end of the first housing. Accordingly, as the bending region of the flexible display is located at the lower end of the first housing, there may be a constraint in forming a connector hole at a side surface of the lower end of the housing (e.g., the lower end of the first housing), as in a typical bar-type electronic device.

In addition, electronic components configuring the rollable electronic device may be densely arranged in the second housing. Accordingly, there may be a constraint in forming a connector hole at an upper side surface of the second housing.

The technical subjects pursued in the disclosure are not limited to the above-described technical subjects, and other technical subjects which are not mentioned herein may be clearly understood from the following description by those skilled in the art to which the disclosure pertains.

### Solution to Problem

An electronic device according to an embodiment disclosed herein may include a flexible display. The electronic device may include a first housing. The electronic device may include a second housing coupled to the first housing and configured to be slidable with respect to the first housing. The electronic device may include a multi-bar structure configured to support at least a portion of a surface of the flexible display. The electronic device may include a guide rail disposed in the first housing and configured to accommodate at least a portion of the multi-bar structure to guide movement of the multi-bar structure. The electronic device may include a guide block disposed in the second housing and coupled to the guide rail to be slidable with respect to the guide rail in response to sliding of the second housing. The electronic device may include a first opening formed in the guide rail. The electronic device may include a connector disposed in the first housing and having at least a portion positioned in the first opening.

An electronic device according to an embodiment of the disclosure may include a first housing and a second housing coupled to the first housing and configured to be slidable with respect to the first housing. A connector port of the electronic device, into which an external device is inserted, may include a guide rail configured to accommodate at least a portion of a multi-bar structure supporting a portion of a surface of a flexible display of the electronic device so as to guide movement of the multi-bar structure and coupled to a guide block disposed in the second housing to be slidable with respect to the guide block. The connector port may include a first opening formed in the guide rail. The connector port may include a second opening formed in the first housing and connected to the first opening. The connector port may include a connector disposed in the first housing and having at least a portion positioned in the first opening.

### Advantageous Effects of Invention

According to an embodiment disclosed herein, a connector hole may be located at a side surface of a rollable electronic device and may be always exposed regardless of a slide-in state and a slide-out state of the electronic device. Accordingly, an external cable may be physically and electrically connected to a connector disposed in the electronic device.

Advantageous effects obtainable from the disclosure are not limited to the above-mentioned effects, and other effects which are not mentioned herein will be clearly understood from the following description by those skilled in the art to which the disclosure pertains.

### Brief Description of Drawings

With regard to the description of the drawings, the same or like reference signa may be used to designate the same or like elements.
FIG. 1 is a block diagram of an electronic device in a network environment according to various embodiments of the disclosure.
FIGS. 2A and 2B are views illustrating the front surface and the rear surface of an electronic device in a slide-in state according to various embodiments of the disclosure.
FIGS. 3A and 3B are views illustrating the front surface and the rear surface of the electronic device in a slide-out state according to various embodiments of the disclosure.
FIG. 4 is an exploded perspective view of an electronic device according to various embodiments of the disclosure.
FIG. 5A is a cross-sectional view of an electronic device taken along line 5a-5a of FIG. 2A, according to various embodiments of the disclosure.
FIG. 5B is a cross-sectional view of the electronic device taken along line 5b-5b of FIG. 3A, according to various of the disclosure.
FIG. 6A is a view illustrating an assembly of a support bracket, a first side surface member, a guide rail, and a guide block according to an embodiment of the disclosure.
FIG. 6B is a view illustrating an assembly of a cover plate and the first side surface member according to an embodiment of the disclosure.
FIG. 6C is a view illustrating a state in which the cover plate of FIG. 6B is assembled to the first side surface member.
FIG. 7A is a view illustrating a guide rail and a protrusion formed on the guide rail according to an embodiment of the disclosure.
FIG. 7B is a side view of FIG. 7A.
FIG. 8 is a cross-sectional view taken along line P1-P1 of FIG. 2B.
FIG. 9A is a cross-sectional view taken along line P1-P1 of FIG. 2B, illustrating a state in which a guide member is disposed in a connector hole.
FIG. 9B is a cross-sectional view taken along line P1-P1 of FIG. 2B, illustrating a state in which a guide member integrally formed with a guide rail is disposed in a connector hole.
FIG. 9C is a cross-sectional view taken along line P1-P1 of FIG. 2B, illustrating a state in which a guide member integrally formed with a first cover plate is disposed in a connector hole.
FIG. 9D is a cross-sectional view taken along line P1-P1 of FIG. 2B, illustrating a state in which a guide member integrally formed with a second cover plate is disposed in a connector hole.
FIGS. 10A and 10B are views illustrating a state in which a flexible printed circuit board connected to a connector is fixed to a support bracket via a fixing bracket and the battery according to an embodiment of the disclosure.
FIG. 11 is a cross-sectional view taken along line P2-P2 of FIG. 10B.

### Mode for the Invention

In the following description, various embodiments of the disclosure will be described with reference to the accompanying drawings. It is to be understood that various embodiments of the disclosure and terms for describing the embodiments are not intended to limit the technical features disclosed herein to specific embodiments, and that the embodiments include various modifications, equivalents, or alternatives of the corresponding embodiments.

In relation to the description of the drawings, similar reference numerals may be used for similar or related components. The singular form of a noun corresponding to an item may include one item or a plurality of items unless the context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

Hereinafter, embodiments of the disclosure will be described in detail with reference to the accompanying drawings so that those skilled in the art to which the disclosure belongs can easily implement the disclosure. However, the disclosure may be implemented in various forms, and should not be construed as being limited to the embodiments set forth herein. In connection with the description of the drawings, the same or similar reference numerals may be used for the same or similar elements. Furthermore, in the drawings and relevant descriptions, descriptions of well-known functions and configurations may be omitted for clarity and brevity.

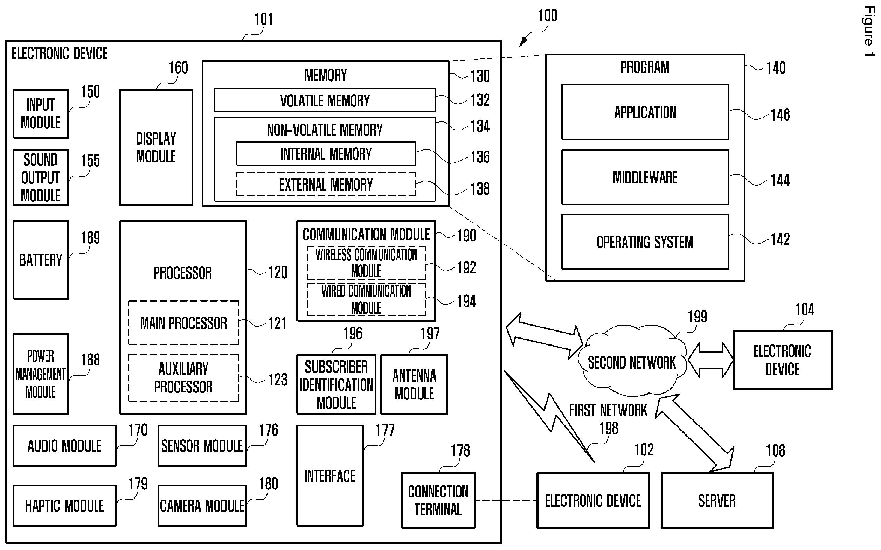

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, **a RFIC** disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

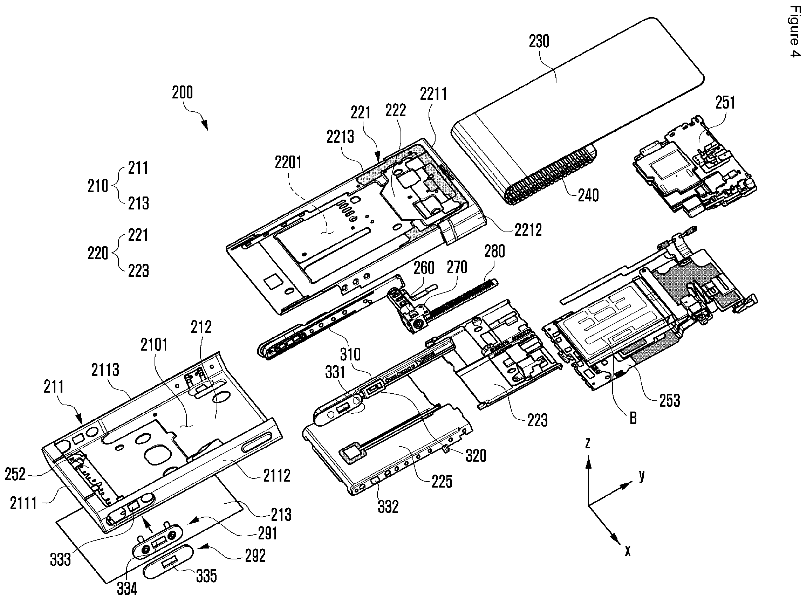

According to various embodiments, the sensor module 176 may include a movement distance detection sensor configured to detect the movement distance of a second housing (e.g., the second housing 220 of FIG. 4) with respect to a first housing (e.g., the first housing 210 of FIG. 4) of an electronic device (e.g., the electronic device 200 of FIG. 4). In an embodiment, the sensor module 176 may be configured to detect a slide-in state, which is a first state in which the second housing 220 is fully slid into the first housing 210, a slide-out state, which is a second state in which the second housing is fully slid out from the first housing 210, or an intermediate state between the slide-in state and the slide-out state. In some embodiments, the processor 120 may, through the sensor module 176, detect the movement distance in real time while the second housing 220 moves with respect to the first housing 210, and may control the display module 160 to display, through a flexible display (e.g., the flexible display 230 of FIG. 4), an object corresponding to a display area that is being varied. In an embodiment, the electronic device 101 may include a driving motor control module 181 configured to control the operation of a driving motor (e.g., a DC motor or a stepping motor) (e.g., the driving motor 260 of FIG. 4) disposed inside the electronic device. In some embodiments, the driving motor control module 181 may be replaced with the processor 120.

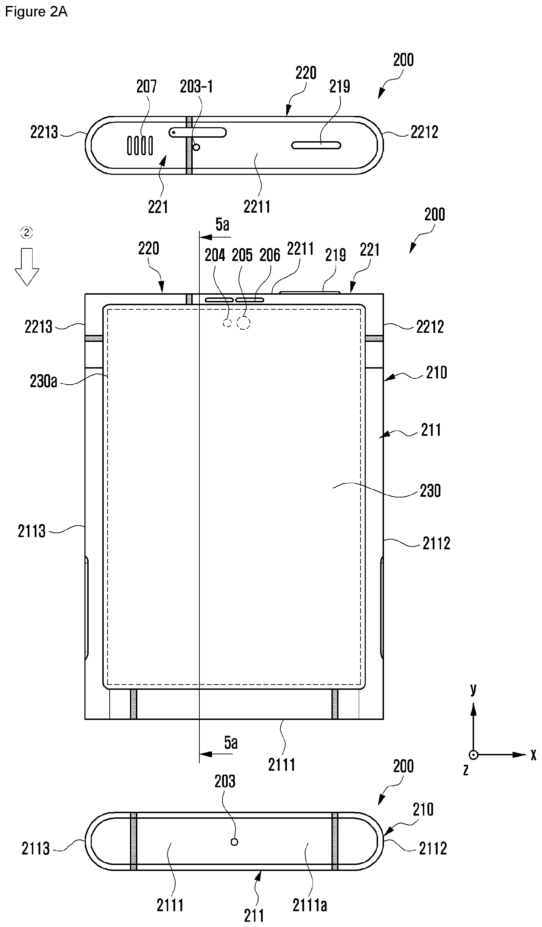

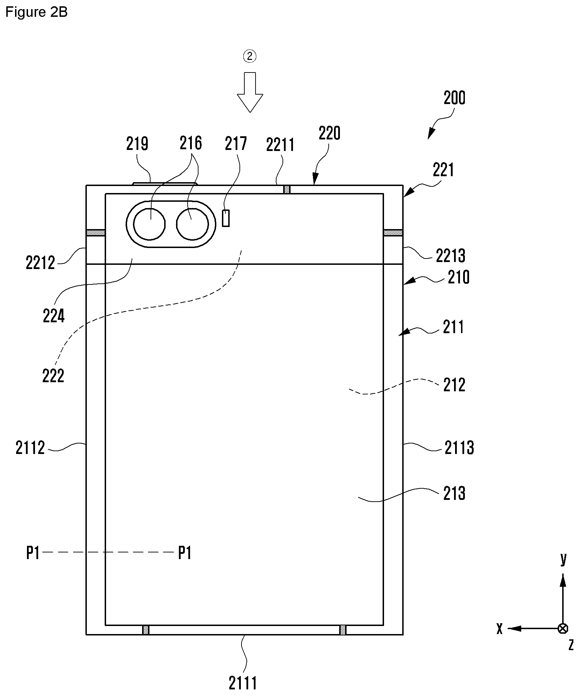

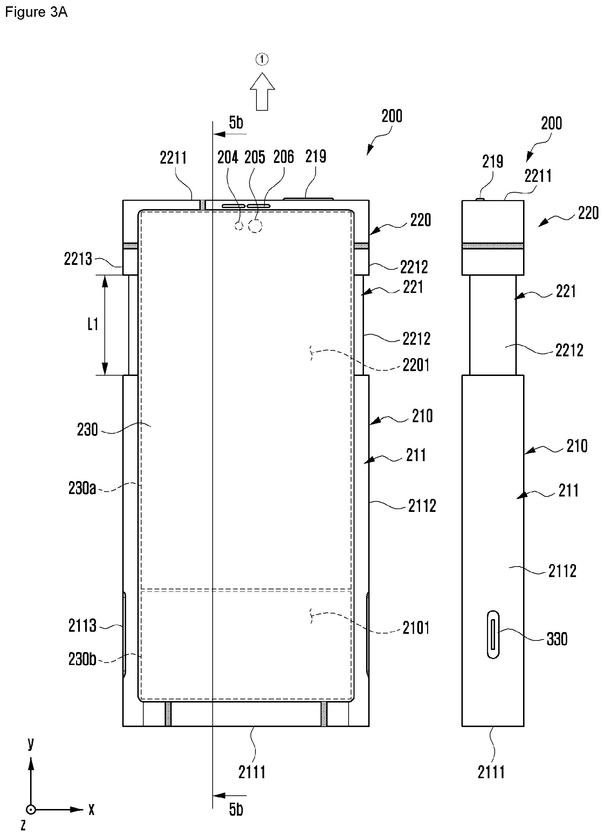

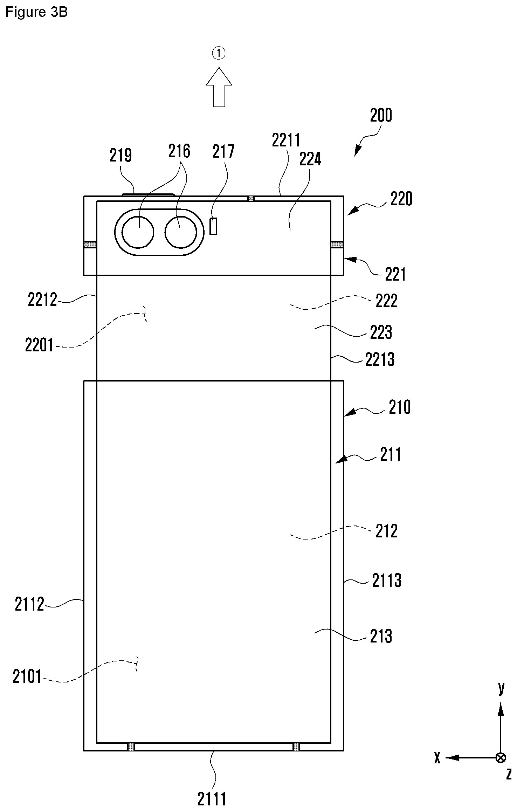

FIGS. 2A and 2B are views illustrating the front surface and the rear surface of an electronic device in a slide-in state according to various embodiments of the disclosure. FIGS. 3A and 3B are views illustrating the front surface and the rear surface of the electronic device in a slide-out state according to various embodiments of the disclosure.

The electronic device 200 of FIGS. 2A to 3B may be at least partially similar to the electronic device 101 of FIG. 1, or may further include other embodiments of an electronic device.

Referring to FIGS. 2A to 3B, an electronic device 200 may include a first housing 210 (e.g., a back cover or a first housing structure), a second housing 220 (e.g., a front cover or a second housing structure) coupled to the first housing 210 to be slidable in a predetermined direction (e.g., a direction ① or a direction ②) (e.g., ty-axis direction) with respect to the first housing 210, and a flexible display 230 (e.g., a rollable display, an expandable display, or a stretchable display) disposed to be supported by at least a portion of the first housing 210 and the second housing 220. In an embodiment, the second housing 220 may be coupled to the first housing 210 to be slidable with respect to the first housing 210 such that the second housing 220 is slid out in the first direction ① or slid in in the second direction ② opposite to the first direction ①. In an embodiment, the electronic device 200 may be changed to the slide-in state, which is the first state, as at least a portion of the second housing 220 is accommodated in at least a portion of a first space 2101 formed through the first housing 210. In an embodiment, the electronic device 200 may be changed to the slide-out state, which is the second state, as at least a portion of the second housing 220 is moved outward (e.g., in the direction ①) from the first space 2101. In an embodiment, the electronic device 200 may include a support member (e.g., the support member 240 of FIG. 4) (e.g., a bendable member, a multi-joint hinge module, a multi-bar assembly, a support bar assembly, or a multi-bar structure) that forms, at least partially, the same plane as at least a portion of the second housing 220 in the slide-out state and is accommodated, at least partially, in the first space 2101 of the first housing 210 in a bending manner in the slide-in state. In an embodiment, at least a portion of the flexible display 230 may be disposed to be supported by at least a portion of the second housing 220. In an embodiment, at least a portion of the remaining portion of the flexible display 230 may be disposed to be supported by the support member 240 (e.g., the support member 240 of FIG. 4). In an embodiment, the support member (e.g., the support member 240 of FIG. 4) may be disposed to be attached to the rear surface of the flexible display 230. In an embodiment, at least a portion of the flexible display 230 may be disposed to be invisible from the outside by being accommodated in the first space 2101 of the first housing 210 in a bending manner while being supported by the support member (e.g., the support member 240 of FIG. 4) in the slide-in state. In an embodiment, at least a portion of the flexible display 230 may be moved to be visible from the outside while being supported by the support member (e.g., the support member 240 of FIG. 4) forming, at least partially, the same plane as the second housing 220 in a slide-out state.

According to various embodiments, the first housing 210 may include a first side surface member 211, and the second housing 220 may include a second side surface member 221. In an embodiment, the first side surface member 211 may include a first side surface 2111 disposed at a lower side of the electronic device 200 and having a first length, a second side surface 2112 extending from one end of the first side surface 2111 in a perpendicular direction (e.g., the y-axis direction) and having a second length, and a third side surface 2113 extending from the other end of the first side surface 2111 in parallel with the second side surface 2112 and having the second length. In an embodiment, the first side surface member 211 may be at least partially formed of a conductive member (e.g., metal). In an embodiment, the first side surface member 211 may be formed by coupling a conductive member and a non-conductive member (e.g., polymer). In an embodiment, the first housing 210 may include a first extension member 212 extending from at least a portion of the first side surface member 211 to at least a portion of the first space 2101. In an embodiment, the first extension member 212 may be integrally formed with the first side surface member 211. In an embodiment, the first extension member 212 may be formed separately from the first side surface member 211 and may be structurally coupled to the first side surface member 211.

According to various embodiments, the second side surface member 221 may include a fourth side surface 2211 disposed at an upper side of the electronic device 200 and having a third length, a fifth side surface 2212 extending from one end of the fourth side surface 2211 in a perpendicular direction (e.g., the -y-axis direction) to correspond to the second side surface 2112 and having a fourth length, and a sixth side surface 2213 extending from the other end of the fourth side surface 2211 in a direction parallel to the fifth side surface 2212 to correspond to the third side surface 2113 and having the fourth length. In an embodiment, the second side surface member 221 may be formed, at least partially, of a conductive member (e.g., metal). In some embodiments, the second side surface member 221 may be formed by coupling a conductive member and a non-conductive member (e.g., polymer). In an embodiment, at least a portion of the second side surface member 221 may include a second extension member 222 extending to at least a portion of a second space 2201 of the second housing 220. In an embodiment, the second extension member 222 may be integrally formed with the second side surface member 221. In some embodiments, the second extension member 222 may be formed separately from the second side surface member 221 and may be structurally coupled to the second side surface member 221.

According to various embodiments, the second side surface 2112 and the fifth side surface 2212 may be coupled to be slidable with respect to each other. In an embodiment, the third side surface 2113 and the sixth side surface 2213 may be slidably coupled to each other. In an embodiment, in the slide-in state, a portion of the fifth side surface 2212 may be disposed to be substantially invisible from the outside by overlapping the second side surface 2112. In an embodiment, in the slide-in state, the remaining portion of the fifth side surface 2212 may be disposed to be visible from the outside. In some embodiments, in the slide-in state, the fifth side surface 2212 may be disposed to be substantially invisible from the outside by overlapping the second side surface 2112. In an embodiment, in the slide-in state, a portion of the sixth side surface 2213 may be disposed to be substantially invisible from the outside by overlapping the third side surface 2113. In an embodiment, in the slide-in state, the remaining portion of the sixth side surface 2213 may be disposed to be visible from the outside. In some embodiments, in the slide-in state, the sixth side surface 2213 may be disposed to be substantially invisible from the outside by overlapping the third side surface 2113. In an embodiment, a portion of the second extension member 222 may be disposed to be visible from the outside in the slide-in state. In some embodiments, in the slide-in state, the second extension member 222 may be disposed to be substantially invisible from the outside by overlapping the first extension member 212.

According to various embodiments, the first housing 210 may include a first rear surface cover 213 coupled to at least a portion of the first side surface member 211. In an embodiment, the first rear surface cover 213 may be disposed to be coupled to at least a portion of the first extension member 212. In some embodiments, the first rear surface cover 213 may be integrally formed with the first side surface member 211. In an embodiment, the first rear surface cover 213 may be formed of polymer, coated or colored glass, ceramic, metal (e.g., aluminum, stainless steel (STS), or magnesium), or a combination of at least two of these materials. In some embodiments, the first rear surface cover 213 may extend to at least a portion of the first side surface member 211. In an embodiment, the first rear surface cover 213 may be omitted, and at least a portion of the first extension member 212 may be replaced by the first rear surface cover 213.

According to various embodiments, the second housing 220 may include a second rear surface cover 223 coupled to at least a portion of the second side surface member 221. In an embodiment, the second rear surface cover 223 may be disposed to be coupled to at least a portion of the second extension member 222. In an embodiment, the second rear surface cover 223 may be integrally formed with the second side surface member 221. In an embodiment, the second rear surface cover 223 may be formed of polymer, coated or colored glass, ceramic, metal (e.g., aluminum, stainless steel (STS), or magnesium), or a combination of at least two of these materials. In some embodiments, the second rear surface cover 223 may extend to at least a portion of the second side surface member 221. In an embodiment, the second rear surface cover 223 may be omitted, and at least a portion of the second extension member 222 may be replaced by the second rear surface cover 223. In some embodiments, the second extension member 222 may be omitted, and the second rear surface cover 223 may replace the second extension member 222. In an embodiment, the second housing 220 may include a window cover 224 disposed on at least a portion of the second rear surface cover. In an embodiment, the window cover 224 may be disposed in a region exposed to the outside of the second housing 220 in the slide-in state, and may be formed of a material facilitating detection of an external environment through at least one camera module 216 and/or sensor module 217 disposed in the internal space 2201 of the second housing 220. For example, the window cover 224 may be formed of a glass and/or polymer material in which at least a region corresponding to the camera module 216 and/or the sensor module 217 is formed to be transparent. In some embodiments, the electronic device 200 may further include a cover member 2111a disposed to cover at least a portion of the first side surface 2111 of the first housing 210.

According to various embodiments, the flexible display 230 may include a first portion 230a (e.g., a flat portion) that is always visible from the outside, and a second portion 230b (e.g., a flexible portion or a bending portion) extending from the first portion 230a and accommodated, in the slide-in state, in the first space 2101 of the first housing 210 in a manner of being at least partially bent to be invisible from the outside. In an embodiment, at least a portion of the first portion 230a may be disposed to be supported by the second housing 220, and the remaining portion of the first portion 230a and the second portion 230b may be disposed to be supported, at least partially, by the support member (e.g., the support member 240 of FIG. 4). In an embodiment, the second portion 230b of the flexible display 230, in a state in which the second housing 220 is slid out along the first direction ①, may form substantially the same plane as the first portion 230a while being supported by the support member (e.g., the support member 240 of FIG. 4), and may be disposed to be visible from the outside. In an embodiment, the second portion 230b of the flexible display 230, in a state in which the second housing 220 is slid in along the second direction ②, may be accommodated in the first space 2101 of the first housing 210 in a bending manner and may be disposed to be invisible from the outside. Accordingly, the flexible display 230 may have a display area that is varied as the second housing 220 moves in a sliding manner with respect to the first housing 210 along a predetermined direction (e.g., the ty-axis direction).

According to various embodiments, the flexible display 230 may have a first display area (e.g., an area corresponding to the first portion 230a) in the slide-in state (e.g., the first state). In an embodiment, when the second housing 220 is transitioned, with respect to the first housing 210, to the slide-out state (e.g., the second state) in which the second housing 220 is moved by a predetermined length L1 (e.g., a sliding stroke), the flexible display 230 may additionally secure, in addition to the first display area, a second display area (e.g., an area corresponding to the second portion 230b) corresponding to the moved predetermined length L1. For example, when the flexible display 230 transitions from the slide-in state to the slide-out state, the display area may be expanded.

According to various embodiments, the electronic device 200 may include at least one of an input device (e.g., the microphone 203-1), an audio output device (e.g., the receiver 206 for a call and/or the speaker 207), sensor modules 204 and 217, a camera module (e.g., the first camera module 205 or the second camera module 216), a connector port 330, a key input device 219, or an indicator (not illustrated), disposed in the second space 2201 of the second housing 220. In an embodiment, the electronic device 200 may include another input device (e.g., a microphone 203) disposed in the first housing 210. In an embodiment, the electronic device 200 may be configured such that at least one of the above-described components is omitted or other components are additionally included. In some embodiments, at least one of the above-described components may be disposed in the first space 2101 of the first housing 210.

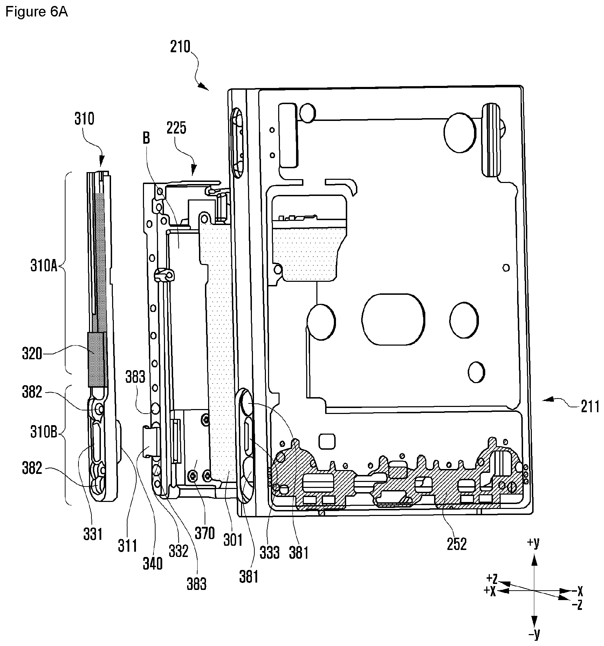

In an embodiment, the connector port 330 may include a connector 340 disposed inside the electronic device 200 and electrically connected to an external device (e.g., a charging cable and/or a data cable), and a connector hole formed in the first housing 210 to correspond to the connector 340 (FIG. 6A) (e.g., a first opening 331 of the guide rail 310 of FIGS. 4 and 6A, a (2-1)^{th} opening 332 of the support bracket 225, a (2-2)^{th} opening 333 of the first side surface member 211, a (3-1)^{th} opening 334 of a first cover plate 291, and/or a (3-2)^{th} opening 335 of a second cover plate 292). In an embodiment, at least one of the guide rail 310, the support bracket 225, the first side surface member 211, the first cover plate 291, and the second cover plate 292, in which the connector hole is formed, may be omitted, or other components may be added. In an embodiment, the external device may be inserted into the connector hole and connected to the connector 340.

In an embodiment of the disclosure, referring to FIG. 3A, the connector port 330 may be exposed to the outside of the electronic device 200 regardless of the slide-in state, the intermediate state, and the slide-out state of the electronic device 200. In summary, the connector 340 (e.g., the connector 340 of FIG. 6A) may be exposed to the outside of the electronic device 200 through the connector hole formed in the first housing 210, and may not be blocked by components of the electronic device 200 in the slide-in state, the intermediate state, and the slide-out state. Accordingly, the external device may be inserted into the connector hole and may be physically and electrically connected to the connector 340 regardless of the slide-in state, the intermediate state, and the slide-out state of the electronic device 200.

According to various embodiments, the input device may include a microphone 203-1. In an embodiment, the input device (e.g., the microphone 203-1) may include a plurality of microphones disposed to detect a direction of a sound. The audio output device may include, for example, a receiver 206 for a call and a speaker 207. In an embodiment, the speaker 207 may correspond to the outside through at least one speaker hole formed in the second housing 220 at a position (e.g., the fourth side surface 2211) that is always exposed to the outside regardless of the slide-in state and the slide-out state. In an embodiment, the receiver 206 for a call may include an operating speaker (e.g., a piezo speaker) without a separate speaker hole.

According to various embodiments, the sensor modules 204 and 217 may generate an electrical signal or a data value corresponding to an operating state inside the electronic device 200 or an environmental state outside the electronic device 200. In an embodiment, the sensor modules 204 and 217 may include, for example, a first sensor module 204 (e.g., a proximity sensor or an illuminance sensor) disposed on the front surface of the electronic device 200 and/or a second sensor module 217 (e.g., an HRM (heart rate monitoring) sensor) disposed on the rear surface of the electronic device 200. In an embodiment, the first sensor module 204 may be disposed below the flexible display 230 on the front surface of the electronic device 200. In an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. In an embodiment, the electronic device 200 may further include a flash (not illustrated) positioned near the second camera module 216. In an embodiment, the camera modules 205 and 216 may include one or more lenses, an image sensor, and/or an image signal processor. In an embodiment, the first camera module 205 may be disposed below the flexible display 230 and may be configured to capture a subject through a portion of an activated area (e.g., a display area) of the flexible display 230.

According to various embodiments, the first camera module 205 among the camera modules and a first sensor module 204 among the sensor modules 204 and 217 may be disposed to detect an external environment through the flexible display 230. For example, the first camera module 205 or the first sensor module 204 may be disposed in the second space 2201 of the second housing 220 to be in contact with the external environment through a transmission area or a perforated opening formed in the flexible display 230. In an embodiment, the area of the flexible display 230 facing the first camera module 205 may be formed as a transmission area having a predetermined transmittance, as a portion of an activated area displaying content. In an embodiment, the transmission area may be formed to have a transmittance in a range of about 5% to about 20%. The transmission area may include an area overlapping an effective area (e.g., an angle-of-view area) of the first camera module 205, through which light passes to be imaged on the image sensor and generate an image. For example, the transmission area of the flexible display 230 may include an area having a lower arrangement density of pixels and/or a lower wire density than surrounding areas. For example, the transmission area may be replaced by the above-described opening. For example, some camera modules 205 may include an under-display camera (UDC). In an embodiment, some sensor modules 204 may be disposed in the second space 2201 of the second housing 220 so as to perform a function thereof without being visually exposed through the flexible display 230.

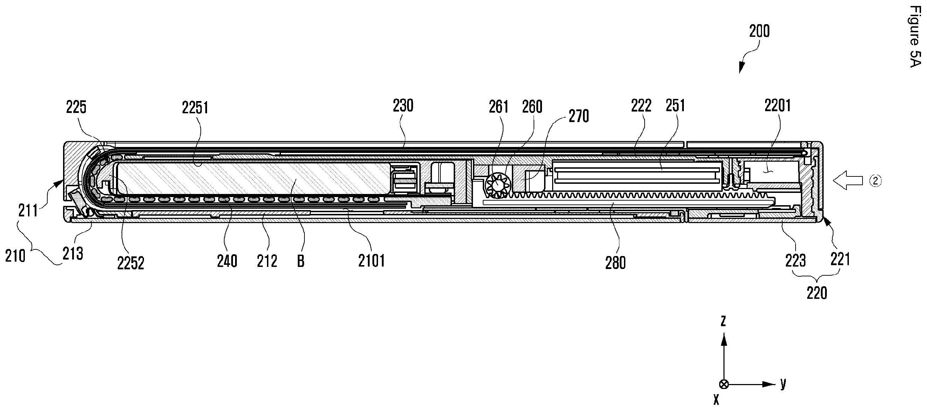

According to various embodiments, the slide-in operation and/or the slide-out operation of the electronic device 200 may be automatically performed. For example, the slide-in operation and/or the slide-out operation of the electronic device 200 may be performed through gear engagement between a driving motor (e.g., the driving motor 260 of FIG. 4) including a pinion gear (e.g., the pinion gear 261 of FIG. 5A) disposed in the second space 2201 of the second housing 220, and a rack gear (e.g., the rack gear 280 of FIG. 5A) disposed in the first space 2101 of the first housing 210, extending to at least a portion of the second space 2201, and engaged with the pinion gear. For example, when the processor (e.g., the processor 120 of FIG. 1) of the electronic device 200 detects a triggering signal for transitioning from the slide-in state to the slide-out state or from the slide-out state to the slide-in state, the processor may drive the driving motor (e.g., the driving motor 260 of FIG. 4) disposed inside the electronic device 200. In an embodiment, the triggering signal may include a signal according to selection (e.g., touch) of an object displayed on the flexible display 230 or a signal according to manipulation (e.g., pressing) of a physical button (e.g., a key button) included in the electronic device 200.

According to various embodiments, the electronic device 200 has a structure in which the second housing 220 is slid in and/or slid out with respect to the first housing 210 along the length direction of the electronic device 200 (e.g., a vertical direction) (e.g., the ty-axis direction), but the disclosure is not limited thereto. For example, the electronic device 200 may have a structure in which the second housing 220 is slid in and/or slid out with respect to the first housing 210 along the width direction (e.g., a horizontal direction) (e.g., the ±x-axis direction) perpendicular to the length direction of the electronic device 200. In some embodiments, the electronic device 200 may be formed such that the length of the first side surface 2111 of the first housing 210 is greater than the length of the second side surface 2112. In this case, the length of the fourth side surface 2211 of the second housing 220 may also be formed to correspond to be greater than the length of the fifth side surface 2212.

FIG. 4 is an exploded perspective view of an electronic device according to various embodiments of the disclosure.

In describing the electronic device 200 of FIG. 4, the same reference numerals are assigned to components substantially identical to those of the electronic device 200 of FIGS. 2A to 3B, and a detailed description thereof may be omitted.

Referring to FIG. 4, the electronic device 200 may include a first housing 210 including a first space 2101, a second housing 220 coupled to the first housing 210 to be slidable with respect to the first housing 210 and including a second space 2201, a support member 240 (e.g., a bendable member or a multi-bar assembly) fixed to at least a portion of the second housing 220 and accommodated in the first space 2101 to be at least partially bendable according to the slide-in operation, a flexible display 230 disposed to be supported by at least a portion of the support member 240 and the second housing 220, and a driving unit (e.g., a driving module or a driving mechanism) configured to drive the second housing 220 in the slide-in direction (e.g., the -y-axis direction) and/or the slide-out direction (e.g., the y-axis direction) with respect to the first housing 210. In an embodiment, the first housing 210 may include a first side surface member 211 and a first rear surface cover 213 (e.g., a first rear bracket) coupled to at least a portion of the first side surface member 211 (e.g., at least a portion of a first extension member 212). In an embodiment, the first space 2101 may be formed through the first side surface member 211 and the first extension member 212. In some embodiments, the first space 2101 may be formed through coupling of the first side surface member 211 and the first rear surface cover 213.

According to various embodiments, the second housing 220 may include a second side surface member 221 and a second rear surface cover 223 (e.g., a second rear bracket) coupled to at least a portion of the second side surface member 221 (e.g., at least a portion of the second extension member 222). In some embodiments, the second housing 200 may further include a window cover coupled to the second rear surface cover 223. In an embodiment, the second space 2201 may be formed through coupling of the second side surface member 221 and the second rear surface cover 223.

According to various embodiments, the driving unit (e.g., a driving module) may include a driving motor 260 disposed in the second space 2201 and including a pinion gear (e.g., the pinion gear 261 of FIG. 5A), and a rack gear 280 fixed to the support bracket 225, extending from the first space 2101 to the second space 2201, and disposed to be engaged with the pinion gear 261. In an embodiment, the electronic device 200 may further include a reduction module (e.g., the reduction module 262 of FIG. 6A) (e.g., a reduction gear assembly) structurally coupled to the driving motor 260 so as to reduce a rotational speed and increase a driving force by being coupled to the driving motor 260. In an embodiment, the driving motor 260 may be disposed to be supported by the second extension member 222 in the second space 2201 of the second housing 220. In an embodiment, the driving motor 260 may be disposed to be supported, at least partially, through a motor bracket 270 fixed to the second extension member 222. In an embodiment, the driving motor 260 may be disposed to be at least partially accommodated in the motor bracket 270. In an embodiment, the driving motor 260 may be disposed to be at least partially surrounded by the motor bracket 270. In an embodiment, the rack gear 280 may be guided in a sliding direction through the motor bracket 270. Accordingly, when the electronic device 200 is assembled, the pinion gear (e.g., the pinion gear 261 of FIG. 5A) may maintain a state of being engaged with the rack gear 280, and the pinion gear 261 receiving a driving force from the driving motor 260 may move along the rack gear 280. As a result, the second housing 220 may be moved in the slide-in direction (e.g., the -y-axis direction) or the slide-out direction (e.g., the y-axis direction) with respect to the first housing 210.

According to various embodiments, the electronic device 200 may include the support bracket 225 fixed in the first space 2101 of the first housing 210. In an embodiment, the first housing 210 may include the support bracket 225.

In an embodiment, the electronic device 200 may include a linear motion (LM) guide including a pair of guide rails 310 (e.g., the guide rails 310 of FIGS. 4 and 6A) fixed to opposite side surfaces of the first housing 210 and a pair of guide blocks 320 (e.g., the guide blocks 320 of FIGS. 4 and 6A) respectively coupled to the pair of guide rails 310 to be slidable. In an embodiment, the guide rail 310 may be referred to as any one of a guide body, a guide fixing portion, or a first guide portion. In an embodiment, the guide block 320 may be referred to as any one of a moving block, a slide block, a guide head, a guide moving portion, or a second guide portion.

In an embodiment, the guide rails 310 may be fixed to opposite side surfaces of the support bracket 225 to guide opposite ends of the support member 240 in a sliding direction (e.g., the second direction ② of FIG. 2B and the first direction ① of FIG. 3A), and guide the second housing 220 in the sliding direction. In an embodiment, the electronic device 200 may include a pair of guide blocks 320 fixed to the first housing and respectively coupled to the pair of guide rails 310 to be slidable. In an embodiment, the support bracket 225 and the pair of guide rails 310 may be fixed to the first housing 210 by fastening members such as screws. In an embodiment, the support bracket 225 may include a battery seating portion (e.g., the battery seating portion 2251 of FIG. 5A) configured to accommodate a battery B and a support portion (e.g., the support portion 2252 of FIG. 5A) formed on one side of the battery seating portion 2251 and configured to support the rear surface of the support member 240 bent during the sliding operation of the second housing 220. In an embodiment, the support portion 2252 may have an outer surface formed in a curved shape (in a semicircular or half-round shape) for smooth guiding of the support member 240. In an embodiment, the support bracket 225 and the guide rails 310 may be fixed in the internal space 2101 of the first housing 210 by fastening members such as screws. In some embodiments, the electronic device 200 may further include a battery cover coupled to the support bracket 225 to cover the battery B. In an embodiment, the rack gear 280 may be fixed, on an outer surface of the support bracket 225, by fastening members such as screws to extend in a direction toward the second space 2201. In an embodiment, the rack gear 280 may be disposed at a center of the support bracket 225 (e.g., a left-right symmetric center of the electronic device 200) to extend across a center of the electronic device 200 along the sliding direction of the second housing 220. Such a central arrangement may reduce current consumption by reducing an increase in driving resistance due to eccentricity during the sliding operation.

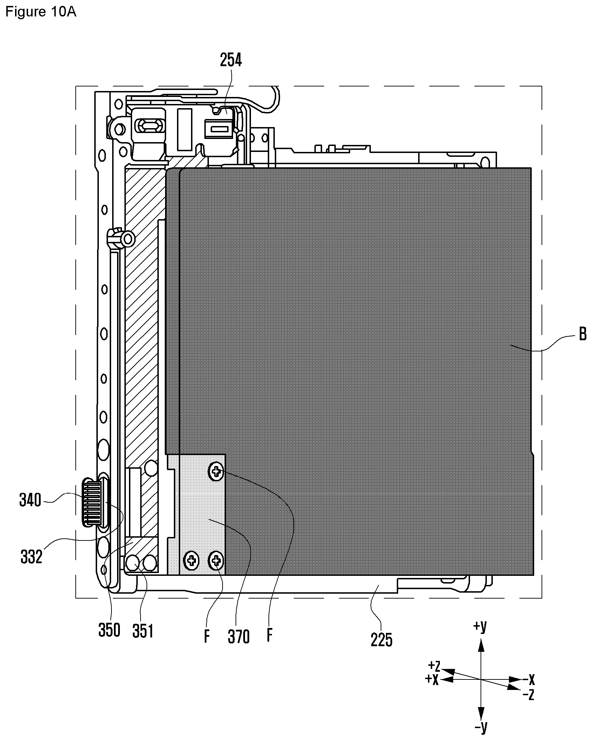

According to various embodiments, the electronic device 200 may include at least one electrical component disposed in the second space 2201. In an embodiment, the at least one electrical component may include a board 251 (e.g., a first board, a board assembly, or a main board) (e.g., stacked boards). In some embodiments, the at least one electrical component may be disposed in the first space 2101 of the first housing 210. According to an embodiment, the electronic device 200 may include, in the first housing 210, a second board 252 (e.g., a sub-board) and an antenna member 253 disposed between the first extension member 212 and the first rear surface cover 213. In an embodiment, the second board 252 and the antenna member not illustrated may be disposed on at least a portion of the first extension member 212. In an embodiment, the second board 252 and the antenna member 253 may be electrically connected to the first board 251 via at least one electrical connection member (e.g., an FPCB, a flexible printed circuit board, or an FRC, a flexible RF cable). In an embodiment, the antenna member may include a multi-function coil or multi-function core (MFC) antenna configured to perform a wireless charging function, a near-field communication (NFC) function, and/or an electronic payment function. In some embodiments, the antenna member may be electrically connected to the second board 252 and may thus be electrically connected to the first board 251 via the second board 252. In some embodiments, the second board 252 and/or the antenna member may be electrically connected to the first board 251 via at least a portion of a flexible board (e.g., the third board 254 of FIG. 10A) connecting the driving motor 260 and the first board 251.

According to various embodiments, the electronic device 200 may include a pair of guide blocks 320 fixed to the second housing 220 and respectively coupled to the pair of guide rails 310 to be slidable. In an embodiment, through slidable coupling between the guide rails 310 and the guide blocks 320, the second housing 220 may be slid out from the first housing 210 by a first distance (e.g., the first distance L1 of FIG. 3A).

Although the electronic device 200 according to an exemplary embodiment of the disclosure is illustrated and described as having the rack gear 280 disposed in the second housing 220 and the driving motor 260 disposed in the first housing 210, the disclosure is not limited thereto. For example, the driving motor 260 may be disposed in the second housing 220, and the rack gear 280 may be disposed in the first housing 210.

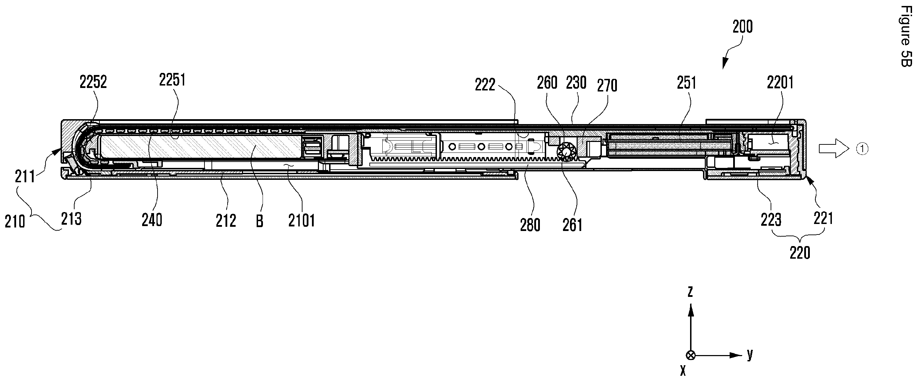

FIG. 5A is a cross-sectional view of an electronic device taken along line 5a-5a of FIG. 2A, according to various embodiments of the disclosure. FIG. 5B is a cross-sectional view of the electronic device taken along line 5b-5b of FIG. 3A, according to various embodiments of the disclosure.

**In describing** the electronic device 200 of FIGS. 5A and 5B, the same reference numerals are assigned to components substantially identical to those of the electronic device 200 of FIG. 4, and a detailed description thereof may be omitted.

Referring to FIGS. 5A and 5B, the electronic device 200 may include a first housing 210 having a first space 2101, a second housing 220 having a second space 2201, a support member 240 connected to the second housing 220 and accommodated, at least partially, in the first space 2101 in the slide-in state, a flexible display 230 disposed to be supported by at least a portion of the support member 240 and at least a portion of the second housing 220, a rack gear 280 fixed in the first space 2101 and extending to the second space 2201, and a driving motor 260 disposed in the second space 2201 and including a pinion gear 261 engaged with the rack gear 280. In an embodiment, the driving motor 260 may automatically move the second housing 220 in a slide-out direction ① or a slide-in direction ② with respect to the first housing 210 through engagement between the pinion gear 261 and the rack gear 280. In an embodiment, the electronic device 200 may include a first rear surface cover 213 coupled to a first extension member 212 extending from a first side surface member 211 of the first housing 210. In an embodiment, the electronic device 200 may include a second rear surface cover 223 coupled to a second extension member 222 extending from the second side surface member 221.

According to various embodiments, a portion of a second housing 220 may be accommodated in the first space 2101 of the first housing 210 in the slide-in state of the electronic device 200 (a state of FIG. 5A). In an embodiment, at least a portion of the flexible display 230 may be disposed to be invisible from the outside by being accommodated in the first space 2101 together with the support member 240 in a bending manner. In this case, the flexible display 230 may expose, to the outside, a second display area (e.g., a display area including the first portion 230a and a second portion 230b of FIG. 3A) expanded from the first display area.

According to various embodiments, at least a portion of the second housing 220 may be transitioned to the slide-out state in which the at least a portion of the second housing 220 is moved, through driving of a driving motor 260, at least partially outward from the first housing 210 along a first direction ①. In an embodiment, the flexible display 230, in the slide-out state of the electronic device 200 (the state of FIG. 5B), may be exposed so that a portion accommodated in the first space 2101 is visible from the outside at least partially by moving together with the support member 240 while being supported by a support bracket 225. In this case, the flexible display 230 may expose, to the outside, a second display area (e.g., a display area including the first portion 230a and a second portion 230b of FIG. 3A) expanded from the first display area.

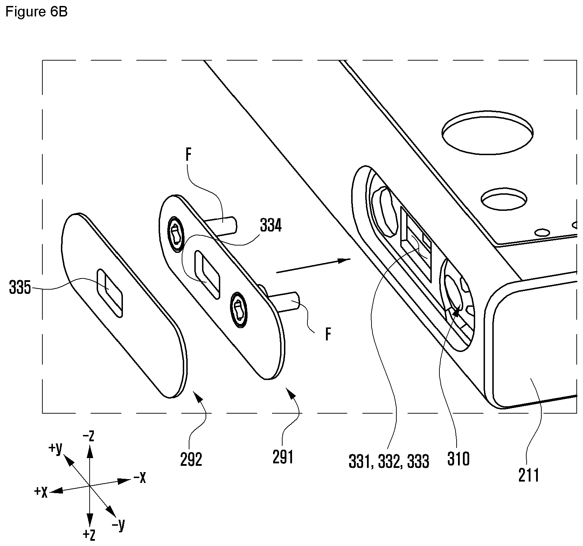

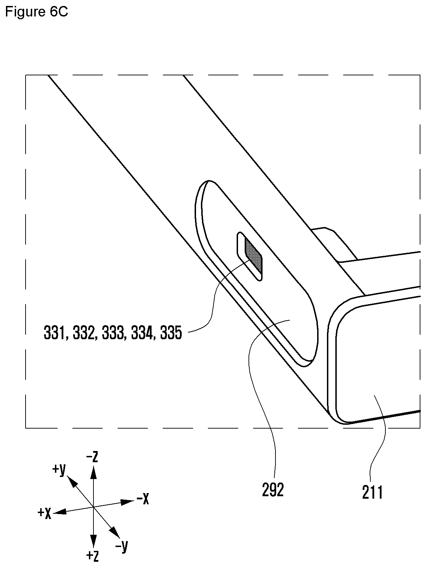

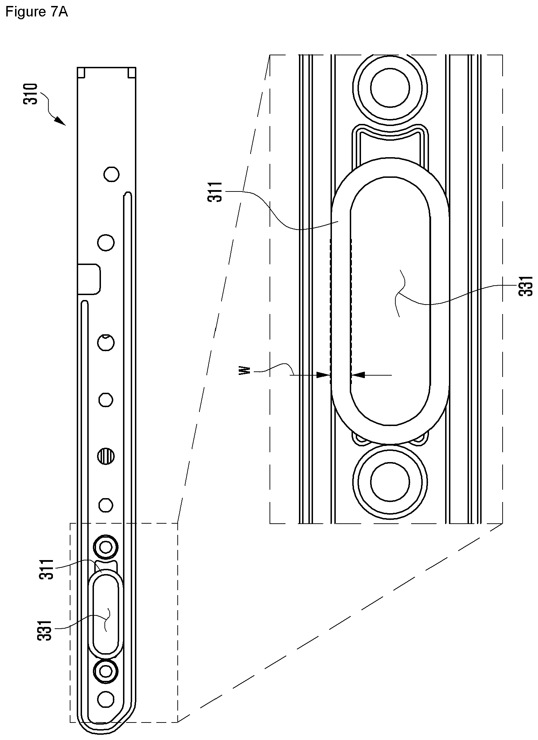

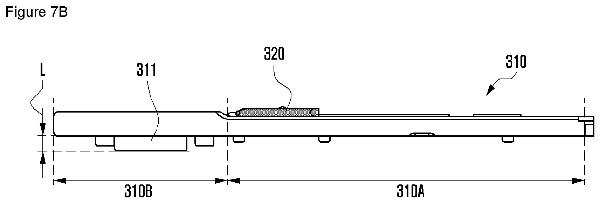

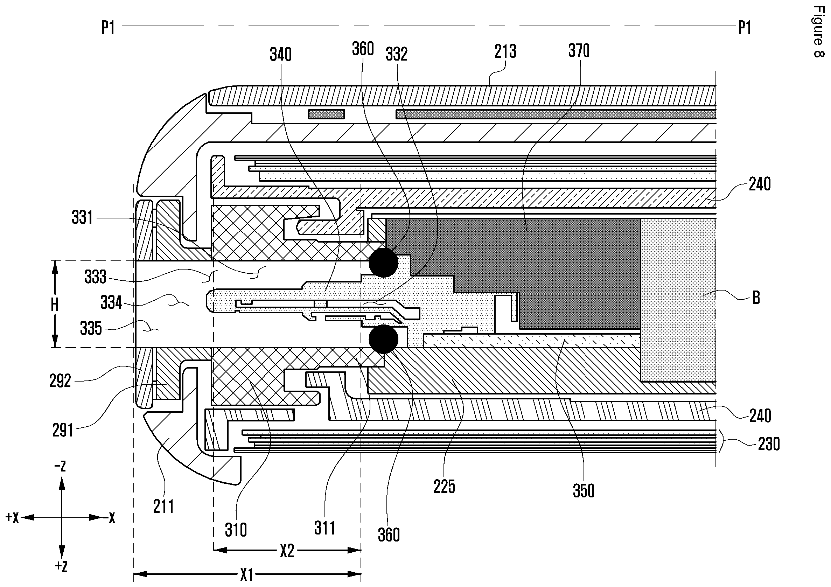

FIG. 6A is a view illustrating an assembly of a support bracket, a first side surface member, a guide rail, and a guide block according to an embodiment of the disclosure. FIG. 6B is a view illustrating an assembly of a cover plate and the first side surface member according to an embodiment of the disclosure. FIG. 6C is a view illustrating a state in which the cover plate of FIG. 6B is assembled to the first side surface member. FIG. 7A is a view illustrating a guide rail and a protrusion formed on the guide rail according to an embodiment of the disclosure. FIG. 7B is a side view of FIG. 7A. FIG. 8 is a cross-sectional view taken along line P1-P1 of FIG. 2B.

According to an embodiment, as illustrated in FIG. 6A, the connector 340 may be disposed inside the first housing 210. For example, the connector 340 may be disposed in the support bracket 225 of the first housing 210. In an embodiment, the connector 340 may be disposed in the support bracket 225 and may be oriented toward the second side surface (e.g., 2112 in FIG. 4) or the third side surface (e.g., 2113 in FIG. 4) of the electronic device 200.

According to an embodiment, as illustrated in FIG. 6A, the guide rail 310 (e.g., a guide body, a guide fixing portion, or a first guide portion) may include a first opening 331. In an embodiment, at least a portion of the connector 340 may be positioned on the guide rail 310 fixed to the support bracket 225. For example, a portion of the connector 340 may be positioned in the first opening 331 formed in the guide rail 310. As will be described later, an external device (e.g., a USB device, a communication cable, or a charging cable) connected to the connector 340 may be positioned in the first opening 331 of the guide rail 310. The types of the external device described above are examples, and the external device may include other devices capable of being connected to the electronic device 200 to provide data or power.

In an embodiment, the external device may be inserted, at least partially, into the first opening 331 to be connected to the connector 340. In an embodiment, the first opening 331 may be formed to have a shape corresponding to an outer shape of the external device. In an embodiment, the guide rail 310 may surround the external device positioned in the first opening 331. The external device may have movement restricted by the guide rail 310 in a state in which the external device is physically connected to the connector 340. Even when shaking (e.g., movement in the Y-axis direction and the Z-axis direction of FIG. 6A) is applied, the external device may not be easily separated from the connector 340. Accordingly, the external device and the connector may maintain a connected state.

According to an embodiment, as illustrated in FIGS. 6A, 6B, and 6C, the first housing 210 may include a second opening 332, 333 connected to the first opening 331 of the guide rail 310. In an embodiment, the second opening 332, 333 may include a (2-1)^{th} opening 332 formed in the support bracket 225 and connected to the first opening 331, and a (2-2)^{th} opening 333 formed in the first side surface member 211 and connected to the first opening 331. In an embodiment, the connector hole may have a structure in which the (2-2)^{th} opening 333 of the first side surface member 211, the first opening 331 of the guide rail 310, and the (2-1)^{th} opening 332 of the support bracket 225 are sequentially connected.

In an embodiment, the (2-1)^{th} opening 332 and the (2-2)^{th} opening 333 may be formed to have shapes corresponding to the external device so as to allow the external device to be inserted into the openings. In an embodiment, the (2-1)^{th} opening 332 and the (2-2)^{th} opening 333 may be formed to have shapes corresponding to the first opening 331. Shapes of the first opening 331, the (2-1)^{th} opening 332, and the (2-2)^{th} opening 333 are merely examples, and the first opening 331, the (2-1)^{th} opening 332, and the (2-2)^{th} opening 333 may be formed in various shapes.

According to an embodiment, as illustrated in FIG. 6A, the support bracket 225 may include a (2-1)^{th} opening 332 connected to the first opening 331 of the guide rail 310. In an embodiment, the connector 340 may be disposed inside the support bracket 225, may pass through the (2-1)^{th} opening 332, and at least a portion of the connector 340 may be positioned in the first opening 331 of the guide rail 310.

According to an embodiment, as illustrated in FIG. 6A, the first side surface member 211 may have at least a portion forming an outer shape of the electronic device 200 and may surround the guide rail 310 and the support bracket 225. In an embodiment, the (2-2)^{th} opening 333 of the first side surface member 211 may be a hole exposed to the outside of the electronic device 200. In an embodiment, the external device may be inserted into the (2-2)^{th} opening 333 of the first side surface member 211 and may be physically and electrically connected to the connector 340.

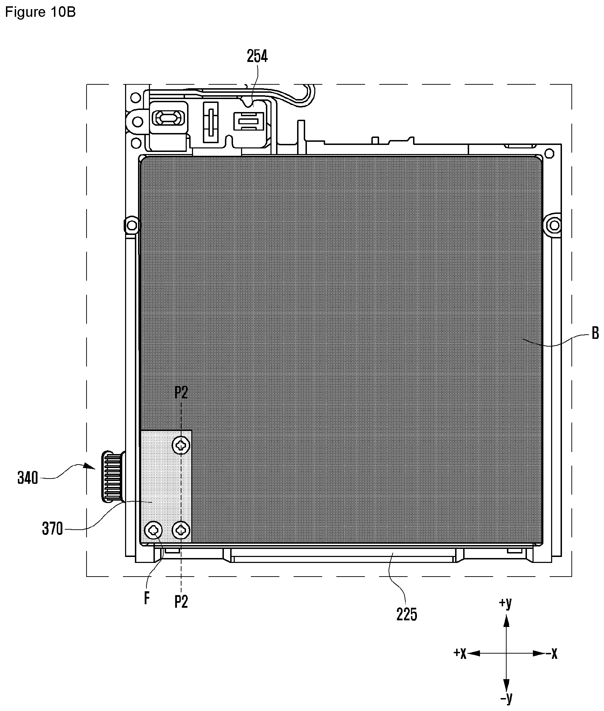

According to an embodiment, as illustrated in FIG. 6A and FIGS. 10A and 10B to be described later, the connector 340 may be connected to a flexible printed circuit board 350 (FPCB, flexible printed circuit board) disposed inside the support bracket 225. The connector 340 and the flexible printed circuit board 350 may be fixed in position through the support bracket 225 and the fixing bracket 370. For example, the connector 340 and the flexible printed circuit board 350 may be disposed between the support bracket 225 and the fixing bracket 370 to be fixed in position. In an embodiment, the fixing bracket 370 may cover, at least partially, the connector 340 and the flexible printed circuit board 350 and may be fixed to the support bracket 225. In an embodiment, a portion of the flexible printed circuit board 350 may be covered by the battery B disposed in the support bracket 225. In an embodiment, the battery plate 301 may be disposed, at least partially, on the support bracket 225 so as to cover the fixing bracket 370 and the battery B. The battery plate 301 may be fixed to the support bracket 225 by screws.

According to an embodiment, as illustrated in FIGS. 6B and 6C, a cover plate 291, 292 may be coupled to a side surface of the first side surface member 211 (e.g., a surface oriented in the +X direction of FIG. 6B and/or a surface oriented in the -X direction of FIG. 6B). In an embodiment, a portion of the cover plate 291, 292 (e.g., a second cover plate 292) may form an exterior of the electronic device 200.

In an embodiment, referring to FIG. 6B, the cover plate 291, 292 may include a first cover plate 291 and a second cover plate 292. In an embodiment, the cover plate 291, 292 may be coupled to the first side surface member 211 in an order of the first cover plate 291 and the second cover plate 292.

In an embodiment, referring to FIGS. 6A and 6B, the first cover plate 291 may be coupled to the first side surface member 211 by a fastening member F (e.g., a screw or a bolt). The fastening member F may pass through a fastening hole 381 formed in the first side surface member 211, a fastening hole 382 formed in the guide rail 310, and a fastening hole 383 formed in the support bracket 225. In an embodiment, the fastening member F may couple the first cover plate 291, the first side surface member 211, the guide rail 310, and the support bracket 225.

In an embodiment, referring to FIG. 6C, the second cover plate 292 may be coupled to the second cover plate 292 by an adhesive member (e.g., a bond or tape). In an embodiment, the second cover plate 292 may cover the fastening member F such that the fastening member F passing through the first cover plate 291 is not visible from an outside of the electronic device 200.

According to an embodiment, as illustrated in FIGS. 6B and 6C, the cover plate 291, 292 may include a third opening 334, 335. In an embodiment, the third opening 334, 335 may include a (3-1)^{th} opening 334 formed in the first cover plate 291 and connected to the (2-2)^{th} opening 333 of the first side surface member 211, and a (3-2)^{th} opening 335 formed in the second cover plate 292 and connected to the (3-1)^{th} opening 334 of the first cover plate 291. In an embodiment, the connector hole may have a structure in which the (3-2)^{th} opening 335 of the second cover plate 292, the (3-1)^{th} opening 334 of the first cover plate 291, the (2-2)^{th} opening 333 of the first side surface member 211, the first opening 331 of the guide rail 310, and the (2-1)^{th} opening 332 of the support bracket 225 are sequentially connected.

In an embodiment, the (3-1)^{th} opening 334 and the (3-2)^{th} opening 335 may be formed to have shapes corresponding to the external device so as to allow the external device to be inserted into the openings. In an embodiment, the (3-1)^{th} opening 334 and the (3-2)^{th} opening 335 may be formed to have shapes corresponding to the first opening 331 and the second opening 332, 333. The shapes of the (3-1)^{th} opening 334 and the (3-2)^{th} opening 335 described above are merely examples, and the (3-1)^{th} opening 334 and the (3-2)^{th} opening 335 may be formed in various shapes.

In an embodiment, the cover plate 291, 292 may be omitted. In this case, the fastening member F may pass through the fastening hole 381 formed in the first side surface member 211, the fastening hole 382 formed in the guide rail 310, and the fastening hole 383 formed in the support bracket 225 to couple the first side surface member 211, the guide rail 310, and the support bracket 225. In an embodiment in which the cover plate 291, 292 is omitted, the connector hole may be configured by the (2-2)^{th} opening 333 of the first side surface member 211, the first opening 331 of the guide rail 310, and the (2-1)^{th} opening 332 of the support bracket 225. In the following embodiments, the connector hole will be described on the assumption that the connector hole is configured by the first opening 331 of the guide rail 310, the second opening 332, 333 of the first housing 210 (e.g., the support bracket 225 and the first side surface member 211), and the third opening 334, 335 of the cover plate 291, 292. However, the following description may be equally applied to a case in which the connector hole is configured by the first opening 331 of the guide rail 310 and the second opening 332, 333 of the first housing 210.

According to an embodiment, referring to FIG. 6A, the electronic device 200 may include a pair of guide blocks 320 disposed in the second housing 220 and coupled to a pair of guide rails 310 (e.g., moving blocks, slide blocks, guide heads, guide moving portions, or second guide portions) to be slidable. In an embodiment, the guide blocks 320 may be disposed on left and right inner side walls in an internal space (e.g., the second space 2201 of FIG. 5A) of the second housing 220 and may be fixed by fastening members (not illustrated) (e.g., screws or bolts) fastened from outer surfaces. In an embodiment, the first housing 210 and the second housing 220 may be coupled to be slidable with respect to each other through a sliding coupling structure between the guide rails 310 and the guide blocks 320.

According to an embodiment, referring to FIGS. 6A, 7A, and 7B, the guide rail 310 may include a first portion 310A coupled to the guide block 320 and a second portion 310B not coupled to the guide block 320.

In an embodiment, referring to FIGS. 7A and 7B, the first portion 310A may be a section in which the guide block 320 slides on the guide rail 310. In an embodiment, a rail (not illustrated) configured to guide sliding of the guide block 320 may be formed in the first portion 310A of the guide rail 310.

In an embodiment, referring to FIGS. 7A and 7B, the first opening 331 may be formed in a region (e.g., the second portion 310B) of the guide rail 310 that does not overlap the guide block 320. For example, the first opening 331 may be formed in the second portion 310B that does not overlap the guide block 320 and is not connected to the guide block 320. Accordingly, the first opening 331 may not be obscured by structural elements (e.g., the second housing 220 and the guide block 320) configuring the electronic device 200 based on the sliding operation of the first housing 210 and the second housing 220. Accordingly, the connector hole configured by the first opening 331, the second opening 332, 333, and the third opening 334, 335 may be constantly exposed to the outside of the electronic device 200 regardless of the slide-in state, the intermediate state, and the slide-out state of the electronic device 200. The connector 340 may be exposed to the outside of the electronic device 200 through the connector hole regardless of the slide-in state, the intermediate state, and the slide-out state of the electronic device 200 and may be physically and electrically connected to the external device.

In the above description, the guide rail 310 has been described as being divided into the first portion 310A and the second portion 310B. However, the guide rail 310 may not be physically divided into the first portion 310A and the second portion 310B. For example, the first portion 310A and the second portion 310B may be integrally formed.

According to an embodiment, as illustrated in FIGS. 7A, 7B, and 8, the guide rail 310 may include a protrusion 311 protruding toward the support bracket 225 disposed inside the first housing 210. In an embodiment, the protrusion 311 may be formed to extend from the second portion 310B of the guide rail 310. In an embodiment, the first opening 331 may be formed, at least partially, in the protrusion 311. For example, the first opening 331 may extend from the second portion 310B toward the protrusion 311. In an embodiment, the protrusion 311 may surround a portion of the connector 340 positioned in the first opening 331.

In an embodiment, referring to FIG. 8, the protrusion 311 may be inserted, at least partially, into the (2-1)^{th} opening 332 of the support bracket 225. In an embodiment, the (2-1)^{th} opening 332 may be formed to have a size capable of accommodating the protrusion 311 of the guide rail 310.

In an embodiment, referring to FIGS. 7A, 7B, and 8, the protrusion 311 of the guide rail 310 may restrict movement of the external device and may support the external device when the external device is inserted into the first opening 331 of the guide rail 310. In an embodiment, the protrusion 311 may support the external device inside the electronic device 200 so that a physical connection state between the external device and the connector 340 may be maintained. For example, referring to FIG. 8 to be described later, when the external device is inserted into the first opening 331 of the guide rail 310 toward the connector 340, a portion of the external device may be surrounded by the second portion 310B and the protrusion 311 of the guide rail 310. Accordingly, even when shaking (e.g., movement in the Y-axis direction of FIG. 6A and the Z-axis direction of FIG. 8) is applied, the external device may not be separated from the connector 340.

In an embodiment, the protrusion 311 of the guide rail 310 may be formed to have a thickness sufficient to support the external device. For example, referring to FIG. 7A, the thickness W of the protrusion 311 may be about 0.65 mm. The above numerical value is merely an example, and the thickness W of the protrusion 311 may be modified to various values that may be implemented by those ordinarily skilled in the art.

In an embodiment, the protrusion 311 of the guide rail 310 may be formed to have a length sufficient to support the external device. For example, referring to FIG. 7B, the length L of the protrusion 311 may be about 2.03 mm. The above numerical value is merely an example, and the length L of the protrusion 311 may be modified to various values that may be implemented by those ordinarily skilled in the art.

According to an embodiment, as illustrated in FIG. 8, the connector hole may be formed to have a size in which the external device may be accommodated. For example, the height H of the connector hole (e.g., the length in the Z-axis direction of FIG. 8) and the width (e.g., the length in the X-axis direction of FIG. 8) may be formed such that the external device may pass through the connector hole and may be supported by structural elements (e.g., the cover plate 291, 292, the guide rail 310, the first side surface member 211, and/or the support bracket 225) in which the connector hole is formed. In an embodiment, referring to FIG. 8, the height H of the first opening 331, the second opening 332, 333, and the third opening 334, 335 may be about 2.56 mm so as to allow the external device to be inserted into the openings. In an embodiment, referring to FIG. 8, the width X1 in which the external device may be supported through the connector hole may be about 6.5 mm. The above numerical values are merely examples, and may be modified to various values that may be implemented by those ordinarily skilled in the art.

In an embodiment, referring to FIG. 8, the external device may be supported by the cover plate 291, 292 and the guide rail 310. In an embodiment, when the external device is inserted toward the connector 340 through the third opening 334, 335, the second opening 332, 333, and the first opening 331, the external device may be surrounded by the cover plate 291, 292 (e.g., the first cover plate 291 and the second cover plate 292) in which the third opening 334, 335 is formed and the second portion 310B and the protrusion 311 of the guide rail 310 in which the first opening 331 is formed. Accordingly, the external device may be supported by the cover plate 291, 292 and the guide rail 310.

In an embodiment, the external device may include a socket (not illustrated) configured to receive the connector 340. The external device may be physically and electrically connected to the connector 340 when the connector 340 is fully inserted into the socket. In an embodiment, a section in which the connector 340 is inserted into the socket of the external device may be the first opening 331 of the guide rail 310. In an embodiment, the connector 340 and the socket of the external device may be supported by the second portion 310B and the protrusion 311 of the guide rail 310 in which the first opening 331 is formed. In an embodiment, the first opening 331 may be formed to have a width X2 of about 5.05 mm such that the connector 340 and the socket may be sufficiently supported.

In the above description, the connector 340 has been described on the assumption that the connector 340 is inserted into the socket of the external device, but the disclosure is not limited thereto. In an embodiment, the connector 340 may include a socket configured to receive a plug (not illustrated) of the external device.

According to an embodiment of the disclosure, the guide rail 310 may guide movement of the support member 240 (e.g., a multi-bar structure) based on the sliding operation of the first housing 210 and the second housing 220. In addition, the guide rail 310 may include the first opening 331 into which the external device is inserted. The guide rail 310 may include the protrusion 311 protruding from the second portion 310B toward the support bracket 225. The first opening 331 may extend toward the protrusion 311. The external device inserted into the first opening 331 may have movement restricted as the exterior of the external device is surrounded by the protrusion 311 and a region of the guide rail 310 (e.g., the second portion 310B) in which the first opening 331 is formed. Accordingly, even when shaking is applied to the external device, the external device may not be easily separated from the connector 340.

According to an embodiment, electrical noise may be generated in the connector 340 and the external device. In an embodiment, when the external device includes a socket, noise may be generated during electrical connection between the socket of the external device and the connector 340. In an embodiment, when the connector 340 includes a socket into which a plug of the external device is inserted, noise may be generated during electrical connection between the socket of the connector 340 and the plug of the external device. Accordingly, structural elements adjacent to the connector 340 may be formed of a conductive material so as to allow noise generated from the connector 340 and the external device to be induced. For example, at least one of the support bracket 225 and the guide rail 310 adjacent to the connector 340 may be formed of a metal material. In addition, at least one of the first side surface member 211, the cover plate 291, 292, and the fixing bracket 370 to be described later may be formed of a metal material so as to allow noise generated from the connector 340 and the external device to be induced.

According to an embodiment, the connector 340 may be connected to the flexible printed circuit board 350 disposed inside the support bracket 225. In an embodiment, when moisture is introduced into a connection portion between the connector 340 and the flexible printed circuit board 350, a failure may occur in the connector 340 and the flexible printed circuit board 350. Accordingly, in an embodiment of the disclosure, a sealing structure (e.g., the waterproofing member 360) configured to prevent introduction of foreign substances such as moisture and dust into the inside of the support bracket 225 in which electronic components such as the connector 340, the flexible printed circuit board 350, and the battery B are disposed may be provided. According to an embodiment, as illustrated in FIGS. 8 to 9D, the waterproofing member 360 may be disposed between the guide rail 310 and the connector 340. In an embodiment, the waterproofing member 360 may be disposed between the second portion 310B of the guide rail 310 and the connector 340 and may surround the first opening 331 of the guide rail 310. In an embodiment, the waterproofing member 360 may be pressed through the second portion 310B of the guide rail 310 and the connector 340 to be in close contact with the second portion 310B and the connector 340. Accordingly, the waterproofing member 360 may block or reduce introduction of foreign substances such as moisture and dust introduced through the third opening 334, 335 of the cover plate 291, 292 into the inside of the support bracket 225 through the (2-1)^{th} opening 332 of the support bracket 225.

According to an embodiment, as illustrated in FIG. 8, the waterproofing member 360 may be disposed between the protrusion 311 of the guide rail 310 and the connector 340 and may surround the first opening 331 of the guide rail 310. In an embodiment, the waterproofing member 360 may be pressed through the protrusion 311 of the guide rail 310 and the connector 340 to be in close contact with the protrusion 311 and the connector 340. Accordingly, the waterproofing member 360 may block or reduce introduction of foreign substances such as moisture and dust introduced through the third opening 334, 335 of the cover plate 291, 292 into the inside of the support bracket 225 through the (2-1)^{th} opening 332 of the support bracket 225.

According to an embodiment, the waterproofing member 360 may be formed of various materials. For example, the waterproofing member 360 may be formed of a rubber-based elastic material such as rubber or urethane. In addition, the waterproofing member 360 may be formed of various materials.

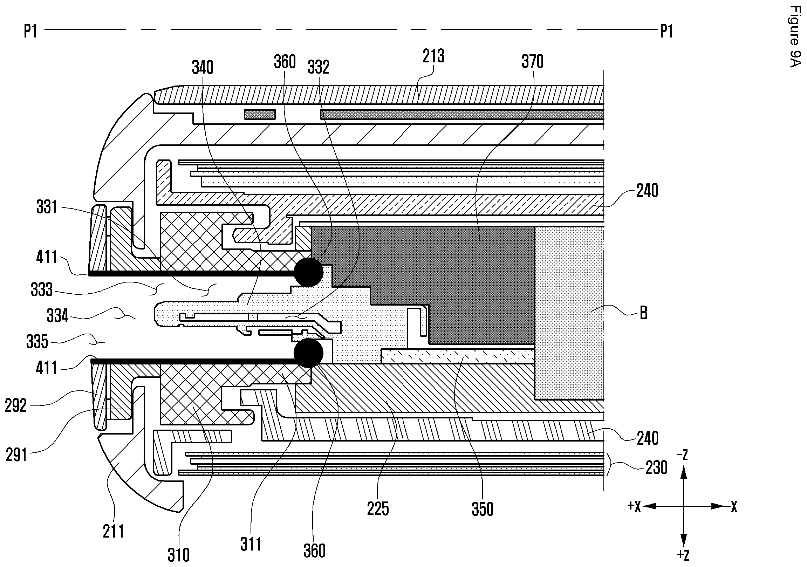

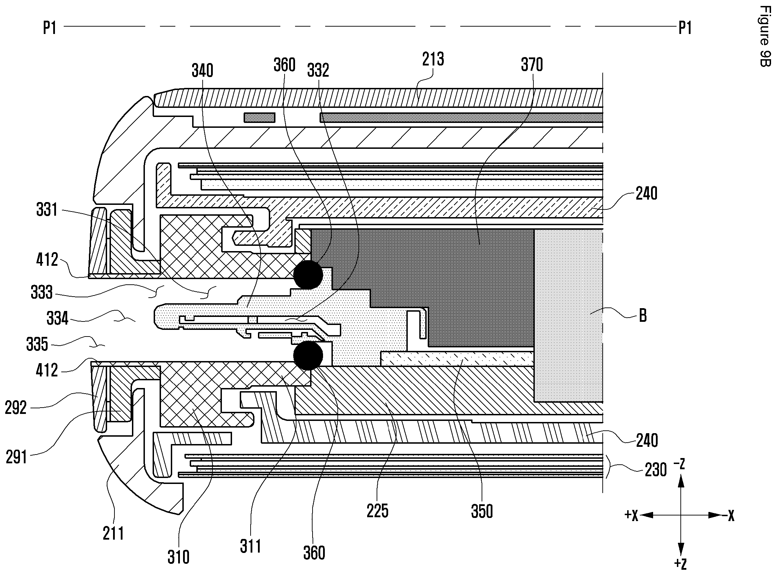

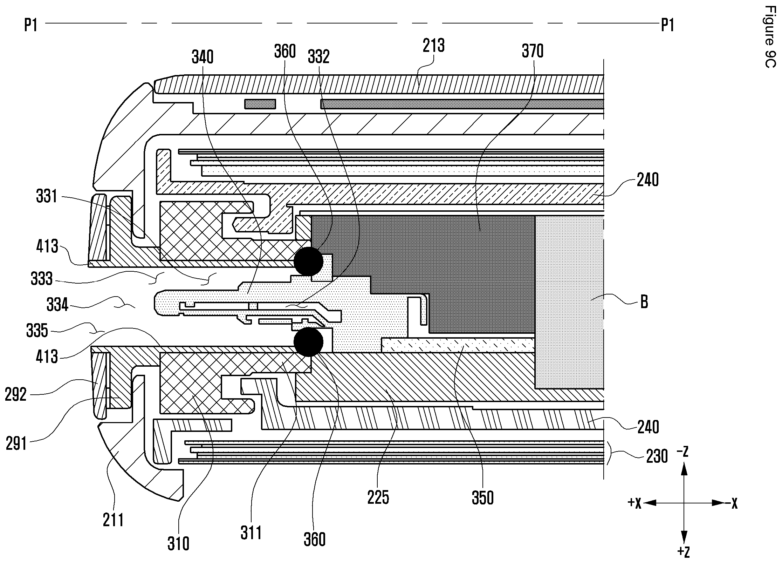

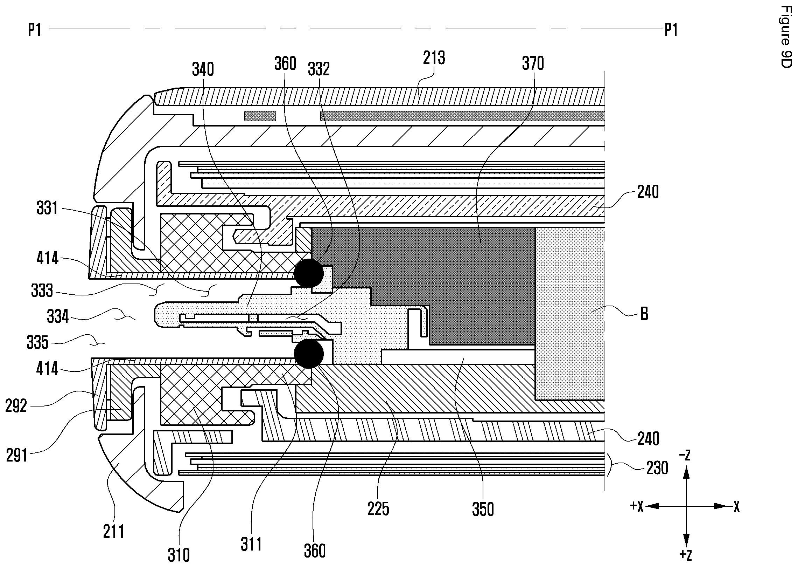

FIG. 9A is a cross-sectional view taken along line P1-P1 of FIG. 2B, illustrating a state in which the guide member is disposed in the connector hole. FIG. 9B is a cross-sectional view taken along line P1-P1 of FIG. 2B, illustrating a state in which the guide member integrally formed with the guide rail is disposed in the connector hole. FIG. 9C is a cross-sectional view taken along line P1-P1 of FIG. 2B, illustrating a state in which the guide member integrally formed with the first cover plate is disposed in the connector hole. FIG. 9D is a cross-sectional view taken along line P1-P1 of FIG. 2B, illustrating a state in which the guide member integrally formed with the second cover plate is disposed in the connector hole.

According to an embodiment, the connector hole may include the first opening 331 of the guide rail 310, the (2-1)^{th} opening 332 of the support bracket 225, the (2-2)^{th} opening 333 of the first side surface member 211, the (3-1)^{th} opening 334 of the first cover plate 291, and the (3-2)^{th} opening 335 of the second cover plate 292. In an embodiment, the openings 331, 332, 333, 334, and 335 may be formed to have sizes corresponding to one another. In an embodiment, due to assembly tolerances among the guide rail 310, the support bracket 225, the first side surface member 211, the first cover plate 291, and the second cover plate 292, the openings 331, 332, 333, 334, and 335 may not be aligned with one another. In addition, due to tolerances, sizes of the openings 331, 332, 333, 334, and 335 may differ from one another. In this case, when the external device passes through one of the openings (e.g., the third opening 334, 335), the external device may be caught by a structural element (e.g., the guide rail 310) located next. For example, the external device may be caught at a joint between the first cover plate 291 and the second cover plate 292, a joint between the first cover plate 291 and the guide rail 310, and/or a joint between the guide rail 310 and the support bracket 225. According to an embodiment of the disclosure, the electronic device may include guide members 411, 412, 413, and 414 disposed in the connector hole and surrounding the connector 340. The guide members 411, 412, 413, and 414 may guide the external device to pass through structural elements (e.g., the guide rail 310, the support bracket 225, the first side surface member 211, the first cover plate 291, and/or the second cover plate 292) without being caught and to be connected to the connector 340.

In an embodiment, referring to FIG. 9A, the guide member 411 may be separately formed and disposed inside the connector hole. For example, the guide member 411 may be disposed in the first opening 331 of the guide rail 310, the (2-2)^{th} opening 333 of the first side surface member 211, and the third opening 334, 335 of the cover plate 291, 292. In an embodiment, the guide member 411 may be formed to surround the connector 340. The guide member 411 may guide the external device to pass through the first cover plate 291, the second cover plate 292, and the guide rail 310 without being caught and to be connected to the connector 340.

In an embodiment, referring to FIG. 9A, at least a portion of the guide member 411 may be disposed inside the first opening 331 of the guide rail 310 to be in contact with the guide rail 310 and may be disposed in the third opening 334, 335 of the cover plate 291, 292 to be in contact with the cover plate 291, 292. In an embodiment, the guide member 411 may be coupled to the cover plate 291, 292 and the guide rail 310 via a separate adhesive member.

In an embodiment in which the cover plate 291, 292 is omitted, the guide member 411 of FIG. 9A may be disposed, at least partially, inside the first opening 331 of the guide rail 310 to be coupled to the guide rail 310 and may be disposed in the (2-2)^{th} opening 333 of the first side surface member 211 to be coupled to the first side surface member 211.

In an embodiment, referring to FIG. 9B, the guide member 412 may be integrally formed with the guide rail 310. In an embodiment, the guide member 412 of FIG. 9B may be disposed, at least partially, in the (2-2)^{th} opening 333 of the first side surface member 211 and the third opening 334, 335 of the cover plate 291, 292. In an embodiment, the guide member 412 may be formed to surround the connector 340. The guide member 412 may guide the external device to pass through the first cover plate 291, the second cover plate 292, and the guide rail 310 without being caught and to be connected to the connector 340.

In an embodiment, referring to FIG. 9B, the guide member 412 may extend from the guide rail 310 toward the third opening 334, 335. In an embodiment, the guide member 412 may extend toward the third opening 334, 335 and may be in contact with the first cover plate 291 and the second cover plate 292. In an embodiment, the guide member 412 may be coupled to the cover plate 291, 292 via a separate adhesive member.

In an embodiment in which the cover plate 291, 292 is omitted, the guide member 412 of FIG. 9B may be disposed in the (2-2)^{th} opening 333 of the first side surface member 211 to be coupled to the first side surface member 211.

In an embodiment, referring to FIG. 9C, the guide member 413 may be integrally formed with the first cover plate 291. In an embodiment, the guide member 413 may be disposed, at least partially, in the first opening 331 of the guide rail 310 and the (3-2)^{th} opening 335 of the second cover plate 292. In an embodiment, the guide member 413 may be formed to surround the connector 340. In an embodiment, the guide member 413 may extend from the first cover plate 291 toward the first opening 331 of the guide rail 310 and the (3-2)^{th} opening 335 of the second cover plate 292 in both directions (e.g., the X-axis direction of FIG. 9C). In an embodiment, the guide member 413 may extend toward the first opening 331 and the (3-2)^{th} opening 335 to be coupled to the second cover plate 292 and the guide rail 310. The guide member 413 may guide the external device to pass through the first cover plate 291, the second cover plate 292, and the guide rail 310 without being caught and to be connected to the connector 340.

In an embodiment, referring to FIG. 9D, the guide member 414 may be integrally formed with the second cover plate 292, and the guide member 414 may be disposed, at least partially, in the (3-1)^{th} opening 334 of the first cover plate 291 and the first opening 331 of the guide rail 310. In an embodiment, the guide member 414 may be formed to surround the connector 340. In an embodiment, the guide member 414 may extend from the second cover plate 292 toward the first opening 331 of the guide rail 310. In an embodiment, the guide member 414 may extend toward the first opening 331 to be in contact with the first cover plate 291 and the guide rail 310. In an embodiment, the guide member 414 may be coupled to the first cover plate 291 and the guide rail 310.

The guide member 414 may guide the external device to pass through the first cover plate 291, the second cover plate 292, and the guide rail 310 without being caught and to be connected to the connector 340.

In an embodiment not illustrated in the drawings, the guide member 414 may be integrally formed with the support bracket 225 and may be disposed in the connector hole. For example, the guide member 414 may extend from the support bracket 225 toward the (3-2)^{th} opening 335 of the second cover plate 292.

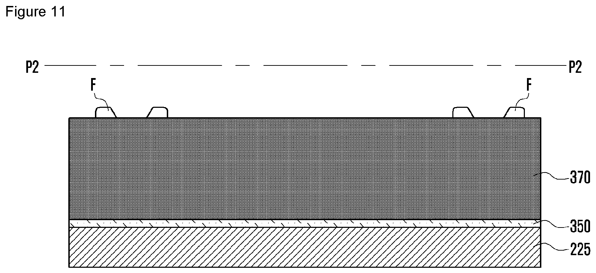

FIGS. 10A and 10B are views illustrating a state in which the flexible printed circuit board connected to the connector is fixed to the support bracket via the fixing bracket and the battery according to an embodiment of the disclosure. FIG. 11 is a cross-sectional view taken along line P2-P2 of FIG. 10B.

According to an embodiment, as illustrated in FIGS. 10A and 10B, the connector 340 may be connected to the flexible printed circuit board 350. In an embodiment, the flexible printed circuit board 350 may be disposed inside the support bracket 225. In an embodiment, the flexible printed circuit board 350 may be connected to the third board 254 (e.g., a flexible board) disposed in the support bracket 225. The third board 254 may be a board connected to the driving motor 260. In an embodiment, the flexible printed circuit board 350 may be connected to the second board 252 disposed in the first extension member 212 of the first side surface member 211. In an embodiment, the second board 252 may be electrically connected to the first board 251. For example, the third board 254 may be electrically connected to the first board 251 via another flexible printed circuit board. Accordingly, the second board 252 may be connected to the third board 254 via the flexible printed circuit board 350 to be electrically connected to the first board 251.

In an embodiment, referring to FIGS. 10A, 10B, and 11, the connector 340 and the flexible printed circuit board 350 may be fixed in position via the support bracket 225 and the fixing bracket 370. For example, the connector 340 and the flexible printed circuit board 350 may be disposed between the support bracket 225 and the fixing bracket 370 to be fixed in position. In an embodiment, the fixing bracket 370 may cover, at least partially, the connector 340 and the flexible printed circuit board 350 and may be fixed to the support bracket 225.

In an embodiment, referring to FIGS. 10B and 11, the fixing bracket 370 may be fixed to the support bracket 225 by a fastening member F. The fastening member F may pass through a screw hole 351 of the flexible printed circuit board 350. In an embodiment, at least a portion of the flexible printed circuit board 350 may be covered by the battery B. Accordingly, the flexible printed circuit board 350 may be pressed by the fixing bracket 370 and the battery B to be fixed in position inside the support bracket 225.

According to an embodiment of the disclosure, an electronic device 101, 200 may include a flexible display 230. The electronic device may include a first housing 210. The electronic device may include a second housing 220 coupled to the first housing and configured to be slidable with respect to the first housing. The electronic device may include a multi-bar structure 240 configured to support at least a portion of a surface of the flexible display. The electronic device may include a guide rail 310 connected to the first housing and fastened to at least a portion of the multi-bar structure to guide movement of the multi-bar structure. The electronic device may include a guide block 320 connected to the second housing and coupled to the guide rail to be slidable with respect to the guide rail in response to sliding of the second housing. The electronic device may include a first opening 331 formed in the guide rail. The electronic device may include a connector 340 disposed in the first housing and configured to be fastenable to an external electronic device through the first opening.

The first opening 331 may be formed in a region of the guide rail that does not overlap the guide block.

The guide rail may include a first portion 310A coupled to the guide block and defining a sliding section of the guide block. The guide rail may include a second portion 310B adjacent to the first portion and having the first opening formed therein.

The guide rail may include a protrusion 311 extending from the second portion toward an inner side of the first housing. The first opening 331 may be formed in the protrusion.

The electronic device may further include a second opening 332, 333 formed in the first housing and connected to the first opening.

The first housing may include a support bracket 225 in which the connector is disposed and to which the guide rail is coupled. The first housing may include a side surface member 221 surrounding the support bracket and the guide rail. The second opening may include a (2-1)^{th} opening 332 formed in the support bracket and connected to the first opening. The second opening may include a (2-2)^{th} opening 333 formed in the side surface member and connected to the first opening and the (2-1)^{th} opening.

The electronic device may further include a guide member 411, 412, 413, 414 disposed in the first opening and the second opening and surrounding a portion of the connector.

The electronic device may further include a guide member 412 extending from the guide rail and having at least a portion positioned in the second opening.

The electronic device may further include a waterproofing member 360 in close contact with the second portion of the guide rail and the connector between the second portion of the guide rail and the connector and surrounding the first opening.

The guide rail may include a protrusion 311 extending from the second portion of the guide rail toward an inner side of the first housing and having the first opening formed therein, and the waterproofing member may be disposed between the protrusion and the connector.

The first housing may include a support bracket 225 coupled to the guide rail. The guide rail and the support bracket may be formed of a metal material, and noise generated from the connector may be induced in the guide rail and the support bracket.

The electronic device may include a flexible printed circuit board 350 electrically connected to the connector and disposed in the first housing. The electronic device may further include a fixing bracket 370 covering a portion of the flexible printed circuit board and the connector and fixed to the first housing.

The flexible printed circuit board may be at least partially covered by a battery B of the electronic device that is disposed in the first housing.

The electronic device may further include a cover plate 291, 292 disposed in the side surface member and including a third opening 334, 335 connected to the second opening.

The electronic device may further include a guide member 411, 412, 413, 414 disposed in the first opening, the second opening, and the third opening and surrounding a portion of the connector.

The electronic device may further include a guide member 413, 414 integrally formed with the cover plate, having at least a portion positioned in the first opening, and surrounding a portion of the connector.

According to an embodiment of the disclosure, an electronic device may include a first housing 210 and a second housing 220 coupled to the first housing to be slidable with respect to the first housing. A connector port 330 of the electronic device, into which an external device is inserted, may include a guide rail 310 configured to accommodate at least a portion of a multi-bar structure 240 supporting at least a portion of a surface of a flexible display 230 of the electronic device so as to guide movement of the multi-bar structure and coupled to a guide block disposed in the second housing to be slidable with respect to the guide block. The connector port may include a first opening 331 formed in the guide rail. The connector port may include a second opening 332, 333 formed in the first housing and connected to the first opening. The connector port may include a connector 340 disposed in the first housing and having at least a portion positioned in the first opening.

The guide rail may include a first portion 310A coupled to the guide block and defining a sliding section of the guide block. The guide rail may include a second portion 310B adjacent to the first portion and having the first opening formed therein.

The guide rail may include a protrusion 311 extending from the second portion toward an inner side of the first housing. The first opening may be formed in the protrusion.

The electronic device may further include a guide member 411, 412, 413, 414 disposed in the first opening and the second opening and surrounding a portion of the connector.

It is to be understood that various embodiments of the disclosure and terms for describing the embodiments are not intended to limit the technical features disclosed herein to specific embodiments, and that the embodiments include various modifications, equivalents, or alternatives of the corresponding embodiments. In relation to the description of the drawings, similar reference numerals may be used for similar or related components. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

According to various embodiments, each component (e.g., a module or a program) of the above-described components may include a single entity or multiple entities, and some of the multiple entities may be separately disposed in different components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

**It** will be understood that, in addition to the above-disclosed embodiments, the disclosure also contemplates and includes embodiments based on combinations of any two or more of the above-disclosed embodiments and embodiments including any combination of the above-described features. They are disclosed herein. That is, the absence of an explicit indication that two features may be combined or two embodiments may be combined does not mean that such combinations are not contemplated, but such combinations should be considered to be included herein.

## Claims

1. An electronic device (101, 200) comprising:
a flexible display (230);
a first housing (210);
a second housing (220) coupled to the first housing and configured to be slidable with respect to the first housing;
a multi-bar structure (240) configured to support at least a portion of a surface of the flexible display;
a guide rail (310) connected to the first housing and fastened to at least a portion of the multi-bar structure to guide movement of the multi-bar structure;
a guide block (320) connected to the second housing and coupled to the guide rail to be slidable with respect to the guide rail in response to sliding of the second housing;
a first opening (331) formed in the guide rail; and
a connector (340) disposed in the first housing and configured to be fastenable to an external electronic device through the first opening.

2. **The** electronic device of claim 1, wherein the first opening is formed in a region of the guide rail that does not overlap the guide block.

3. **The** electronic device of claim 1, wherein the guide rail comprises:
a first portion (310A) coupled to the guide block and defining a sliding section of the guide block; and
a second portion (310B) adjacent to the first portion and having the first opening formed therein.

4. The electronic device of claim 3, wherein the guide rail comprises a protrusion (311) extending from the second portion toward an inner side of the first housing, and
the first opening is formed in the protrusion.

5. The electronic device of claim 1 or 3, further comprising:
a second opening (332, 333) formed in the first housing and connected to the first opening.

6. The electronic device of claim 5, wherein the first housing comprises a support bracket (225) in which the connector is disposed and to which the guide rail is coupled, and a side surface member (221) surrounding the support bracket and the guide rail, and
wherein the second opening comprises a (2-1)^{th} opening (332) formed in the support bracket and connected to the first opening, and a (2-2)^{th} opening (333) formed in the side surface member and connected to the first opening and the (2-1)^{th} opening.

7. The electronic device of claim 5, further comprising:
a guide member (411, 412, 413, 414) disposed in the first opening and the second opening and surrounding a portion of the connector.

8. The electronic device of claim 5, further comprising:
a guide member (412) extending from the guide rail and having at least a portion positioned in the second opening.

9. The electronic device of claim 3, further comprising:
a waterproofing member (360) in close contact with the second portion and the connector between the second portion of the guide rail and the connector, and surrounding the first opening.

10. The electronic device of claim 9, wherein the guide rail comprises a protrusion (311) extending from the second portion of the guide rail toward an inner side of the first housing and having the first opening formed therein, and
wherein the waterproofing member is disposed between the protrusion and the connector.

11. The electronic device of claim 1, wherein the first housing comprises a support bracket (225) coupled to the guide rail, and
wherein the guide rail and the support bracket are formed of a metal material, and noise generated from the connector is induced in the guide rail and the support bracket.

12. The electronic device of claim 1, further comprising:
a flexible printed circuit board (350) electrically connected to the connector and disposed in the first housing; and
a fixing bracket (370) covering a portion of the flexible printed circuit board and the connector and fixed to the first housing.

13. The electronic device of claim 6, further comprising:
a cover plate (291, 292) disposed in the side surface member and comprising a third opening (334, 335) connected to the second opening.

14. The electronic device of claim 13, further comprising:
a guide member (411, 412, 413, 414) disposed in the first opening, the second opening, and the third opening and surrounding a portion of the connector.

15. The electronic device of claim 13, further comprising:
a guide member (413, 414) integrally formed with the cover plate, having at least a portion positioned in the first opening, and surrounding a portion of the connector.
